# EUROPÄISCHE PATENTSCHRIFT

(11) **EP 0 750 736 B1**
(45) Veröffentlichungstag und Bekanntmachung des Hinweises auf die Patenterteilung: **26.05.1999**
(21) Anmeldenummer: 95910430.8
(22) Anmeldetag: 02.03.1995
(51) Int. Cl.: G01G 19/415, G01D 7/00

(54) **Benutzung einer Anzeige einer eichfähigen Messeinrichtung**
Use of a display of a measuring device suitable for calibration
Usage d'un écran d'un dispositif de mesure approprié pour une vérification

(30) Priorität: 14.03.1994 DE 4408549
(43) Veröffentlichungstag der Anmeldung: 02.01.1997
(73) Patentinhaber: Siemens Nixdorf Informationssysteme AG, 33106 Paderborn (DE)
(72) Erfinder: OELKERS, Hans-Joachim, D-12107 Berlin (DE); SCHWARZKOPF, Joachim, D-12209 Berlin (DE)
(74) Vertreter: Epping, Wilhelm, Dr.-Ing.
(86) Internationale Anmeldenummer: DE9500271
(87) Internationale Veröffentlichungsnummer: WO9525263

(56) Entgegenhaltungen:
- EP-A- 0 176 242
- EP-A- 0 557 921
- DE-A- 3 003 255
- DE-A- 3 144 897
- US-A- 4 325 441
- WAGEN UND DOSIEREN, Bd. 16, Nr. 1, Februar 1985 MAINZ DE, Seiten 21-25, KLAUS WIEDEMANN 'Bildschirmanzeigen für eichfähige Waagen'

## Beschreibung

### Technisches Gebiet

Die Erfindung betrifft eine Verfahren zur Benutzung einer Anzeige einer eichfähigen Meßeinrichtung bei einer Kombination einer Meßeinrichtung mit einer Datenverarbeitungseinrichtung, inbesondere die Kombination einer Waage mit einer Kasse. Sie betrifft auch eine entsprechende Anordnung.

### Stand der Technik

Meßeinrichtungen für Warenmengen, insbesondere im Handelsbereich, wie Waagen zur Messung des Gewichts haben eine Anzeige, auf der die gemessene Menge angezeigt wird. Nach den gesetzlichen Bestimmungen müssen solche Meßeinrichtungen geeicht sein und von der Eichbehörde zugelassen sein, wenn sie zur Abrechnung dienen.

Häufig werden solche Meßeinrichtungen, beispielsweise Waagen, gemeinsam mit einer Kasse benutzt, wobei die Kasse die Preise der gemessenen Waren zusammen mit anderen, nicht von der Meßeinrichtung gemessenen Waren erfaßt. Beide Geräte haben dem Kunden zugewandte Anzeigen, sogenannte Kundenanzeigen, um die Menge, den Grundpreis und den jeweiligen Preis anzuzeigen. Soll dem Kunden auch ein Beleg über die Warenmenge mitgegeben werden, so sind zwei Belegdrucker erforderlich, einer an der Waage und einer an der Kasse. Eine solche Kombination von Waagen und Kasse ist in der DE OS 3003255 dargestellt.

Wünschenswert ist eine einzige Einrichtung mit nur einer Anzeige und einem Belegdrucker, wobei die Anzeige und der Beleg sowohl die Meßwerte als auch die Preise der gemessenen Waren enthält als auch zur Anzeige und zum Ausdruck von Stückzahl, Bezeichnung und Preis sonstiger, nicht gemessener Waren verwendet werden kann. Eine gemeinsame Anzeige ist zulässig, wenn die angezeigten Daten nicht mit Meßergebnissen oder daraus abgeleiteten Preisen verwechselt werden können. Bestimmungen hierzu finden sich in der DIN EN 45501, die den Empfehlungen R 76-1 der "Organisation Internationale de Métrologie Légale", OIML, entspricht.

Eine solche Einrichtung kann beispielsweise modular aus auch für Personal Computer verwendeten Komponenten aufgebaut werden, wobei die Meßzelle einer Waage an einen Eingang für serielle Datenübertragung angeschlossen wird. Die Zentraleinheit wertet die Meßergebnisse aus, zeigt den Meßwert an und berechnet den Preis mittels eines vorab eingespeicherten spezifischen Preises (Grundpreis, unit price), der auch aus einer Preistabelle (PLU, price lookup table) entstammen kann. Damit ist jedoch die gesamte Kombination aus Meßeinrichtung, Datenverarbeitungseinrichtung und Anzeige- bzw. Druckeinrichtung eine eichpflichte Einrichtung, die gegen Veränderungen zu schützen ist. Durch die modulare Architektur und die verbreiteten Kenntnisse darüber ist diese Einrichtung nur als gesamte gegen Manipulationen schützbar, indem beispielsweise das gesamte Gehäuse durch eine Plombe gegen Öffnung versiegelt wird. Anderungenin der Betriebssoftware oder Austausch von Moduln erfordern damit eine Überprüfung und neue Abnahme bei der Eichbehörde.

In einem Aufsatz von K, Wiedemann 'Bildschirmanzeigen für eichfähige Waagen' wägen+dosieren 1) 1985 Seiten 21-25 Mainz (DE) ist im mittleren Absatz der rechten Spalte auf Seite 23 ein nicht änderbares Programm vorgeschlagen.

Aufgabe er Erfindung ist es daher, eine Kombination von Meßeinrichtung und Kasse bereitzustellen, die eine gemeinsame Ausgabevorrichtung aufweist, aber ohne Verlust der Zulassung bzw. Eichung einen Austausch der Kassensoftware und von Hardware-Moduln, die nicht unmittelbar zu der Meßeinrichtung gehören, erlaubt.

### Darstellung der Erfindung

Diese Aufgabe wird durch ein Verfahren nach dem Anspruch 1 und eine entsprechende Anordnung nach dem Anspruch 10 gelöst.

Die Erfindung besteht darin, eine Auswerteeinheit vorzusehen, die die Meßdaten, beispielsweise über eine Verbindung mit einem Meßaufnehmer, bereitstellt und eine Anzeigeeinheit betreibt, deren Anzeigemöglichkeiten über die Anzeige von Meßergebnissen hinausgeht und von der Datenverarbeitungseinrichtung der Kasse diese zusätzlichen Anzeigedaten empfängt. Die Eichfähigkeit dieser Anordnung wird dadurch erreicht, daß, wie in der Beschreibung im einzelnen ausgeführt wird, die Auswerteeinheit eine Filterfunktion durchführt und nur solche Daten zur Anzeige bringt, die entweder Meßdaten sind oder nicht mit solchen verwechselt werden können. Dabei ist es sowohl möglich, daß die Datenverarbeitungseinrichtung die Wiegedaten empfängt, daraus eine oder mehrere Anzeigezeilen oder Teile von Anzeigezeilen aufbereitet und an die Auswerteeinheit zwecks Anzeige sendet. In diesem Falle übernimmt die Auswerteeinheit lediglich die Überprüfung der von der Datenverarbeitungseinrichtung gewünschten Anzeige. Eine andere Möglichkeit zur Durchführung der Erfindungsidee besteht darin, zwar das Meßergebnis und den berechneten Preis von der Auswerteeinheit zu empfangen, aber in die Anzeigedaten Steueranweisungen aufzunehmen, die durch die Meßwerte bzw. berechneten Preise ersetzt werden.

Eine andere Ausführung der Erfindungsidee besteht darin, eine Meßeinrichtung, beispielsweise eine Waage, die bereits eine flexible Kundenanzeige besitzt, mit einem Datenübertragungseingang zu versehen, über den von einem Kassenmodul ohne Kundenanzeige Anzeigedaten zur Anzeige auf der Kundenanzeige übertragen werden, wobei die Meßeinrichtung die so übermittelten Anzeigedaten daraufhin überprüft, ob sie mit Meßergebnissen verwechselbar sind, und nur dann zur Anzeige bringt, wenn diese Gefahr nicht besteht. Die Anzeigedaten sind dabei Formatbeschreibungen oder Maskendefinitionen der in der Programmierung von Anzeigesystemen bekannten Art. Eine solche Waage kann von einem Waagenhersteller in geeichter Form ausgeliefert und mit einer großen Anzahl verschiedener Kassiereinrichtungen beim Kunden kombiniert werden, ohne daß die Kassiereinrichtungen einer Eichung bedürfen.

Die verschiedenen Ausführungsformen unterscheiden sich im Grad der Flexibilität der Anzeige und in dem Aufwand zur Prüfung. Die Verwendung von Formatbeschreibungen, in denen Platzhalter für Meßergebnis und Preis enthalten sind, erfordern keine Analyse der gewünschten Ausgabe, beschränken die Ausgabe aber auf die vorgesehenen Formate. Eine Analyse der übermittelten Daten auf Widersprüche zu den gemessenen Ergebnissen und der notwendigen Relationen zwischen Gewicht, Grundpreis und Preis hingegen läßt größere Flexibilität in der Anzeige zu. Die jeweils praktisch gewählte Ausführungsform richtet sicht dabei nach den Bestimmungen der jeweiligen Zulassungsbehörde.

### Kurzbeschreibung der Zeichnungen

### Es zeigen

- Fig. 1: die prinzipielle Anordnung der Moduln und den prinzipiellen Datenfluß einer Meßeinrichtung mit Datenverarbeitungseinrichtung,
- Fig. 2: die gleiche Anordnung wie Fig. 1 mit angedeutetem Bussystem für die Aufnahme von Moduln.

### Detaillierte Beschreibung der Erfindung

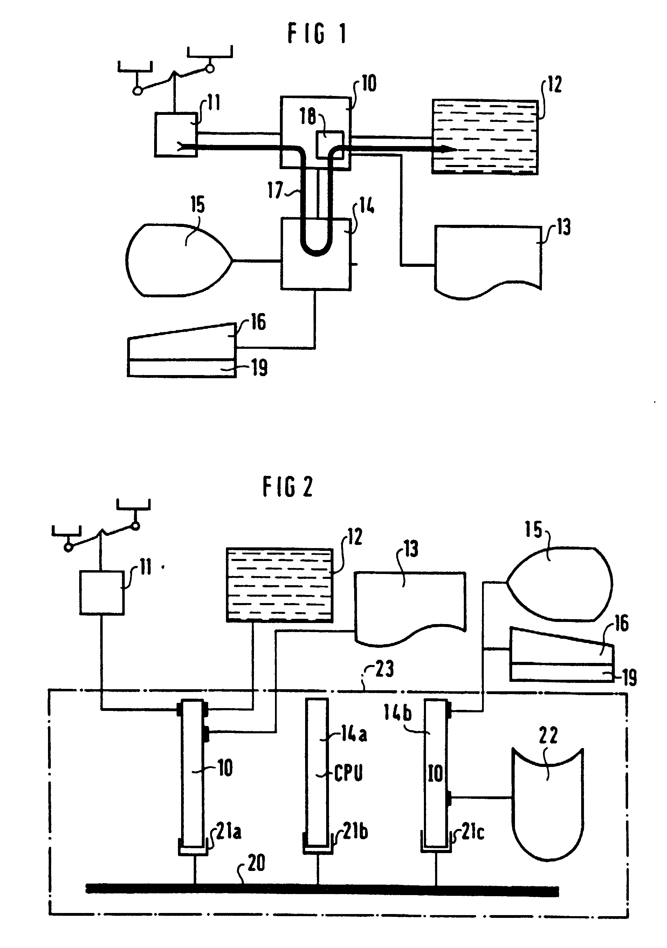

In Fig. 1 ist eine Meßeinrichtung dargestellt, die hier und im folgenden beispielhaft als Waage bezeichnet werde. Die Waage besteht aus einem Meßaufnehmer 11, der mit einer Auswerte- und Steuereinheit 10 verbunden ist. Die Auswerteeinheit 10 ist mit einer Anzeigeeinheit 12 verbunden, auf der der Meßwert, also das Gewicht, und möglicherweise auch noch aus dem Gewicht abgeleitete Werte, insbesondere der Preis, angezeigt werden. Dabei soll gleichzeit der spezifische Preis (Grundpreis), also z.B. in DM/kg, mit angezeigt werden. Im folgenden werden die Einheiten DM, DM/kg und kg stellvertretend für beliebige andere Währungs- oder Gewichtseinheiten verwendet.

Die Waage wird zusammen mit einer Datenverarbeitungseinrichtung 14 betrieben, die hier und im folgenden beispielhaft als Kasse bezeichnet werden soll. Für die Waren, deren Preis durch Auswiegen bestimmt wurde, wird der Preis von der Auswerteeinheit 10 an die Kasse 14 übertragen. Die Kasse besitzt ihrerseits Peripheriegeräte, die beispielshaft als Display 15, Tastatur 16 und Kassenlade 19 dargestellt sind. Die Tastatur 16 dient zum Eingeben von Daten für Waren, die nicht gewogen werden, sondern beispielsweise mit Preisen per Stück verkauft werden. Ferner ist regelmäßig ein Drucker 13 vorhanden, auf dem Preise und Meßwerte ausgedruckt werden.

Bislang werden dabei die Waage mit dem Meßaufnehmer 11, der Auswerteeinheit 10, der Anzeigeeinheit 12 und dem Drucker 13 als autonomes Gerät mit eigenem Gehäuse gestaltet, das nacht der vorgeschriebenen Zulassung durch die Eichbehörde nicht mehr verändert werden darf. Demgemäß ist die Kasse 14 mit Tastatur 16, Kassenlade 19 und Display 15 ein zweites autonomes Gerät, das möglicherweise von der Waage Wiegedaten erhält und mittels eines zweiten, nicht dargestellten Bon-Druckers, auf dem nur Preise, nicht jedoch Wiegedaten, erscheinen, ausdruckt. Beide Geräte sind mit nicht dargestellten Gehäusen umgegeben. Die Waage kann Preistabellen entweder selbst enhalten, auf auswechselbaren Datenträgern halten oder über Kommunikationseinrichtungen übertragen bekommen.

Da Kassen in verstärktem Maße als spezialisierte Geräte, aber auf der Basis von für Personal Computer verwendeten Techniken und Moduln hergestellt werden, wird die Auswerteeinheit als Modul in die Kasse integriert, wie es in Fig. 2 dargestellt ist. Die mit gleichen Bezugszeichen dargestellten Elemente sind die gleichen wie in Fig. 1. Dabei besteht die Kasse aus einem Gehäuse 23, das ein nicht gezeichnetes Netzteil bekannter Art enhält und mehrere, durch einen Bus 20 verbundene Modulplätze 21a, 21b und 21c enthält, auf die als Moduln eine Auswerteeinheit 10, eine Zentraleinheit 14a und eine Peripherie-Steuereinheit 14b gesteckt sind. Als Bussystem kann beispielsweise der Personal Computer Bus Standard P996 verwendet werden, dessen Entwurf als Draft D2.00 mit Datum vom 18. Januar 1990 von dem IEEE veröffentlicht wurde. Weitere Beispiele sind der IEC-Bus, der üblicherweise zur Verbindung von Meßgeräten verwendet wird, und auch der SCSI-Bus zur Verbindung von Computer-Peripherie.

Die für den Kunden bestimmte Anzeige 12, kurz Kundenanzeige genannt, ist bei bekannten Anordnungen mit der Peripheriesteuerung 14b verbunden (nicht dargestellt). Damit zieht jedoch eine Änderung oder Reparatur innerhalb des mit 23 angegebenen Gehäuses eine neue Eichung des gesamten Geräts nach sich.

Die Erfindung verbindet nun die Anzeigeeinheit 12 und einen optional vorhandenen Drucker 13 unmittelbar mit der Auswerteeinheit 10. Da der Modul 10 gekapselt und damit plombierbar hergestellt und die Verbindungen zum Meßaufnehmer 11 und zur Anzeige 12 gleichfalls geschützt werden können, ist die Kombination von Auswerteeinheit 10, Meßaufnehmer 11 und Anzeigeeinheit 12 getrennt eichbar. Eine Veränderung der Soft- oder Hardware der restlichen Komponenten der Kasse ist damit ohne weiteres zulässig.

Die Erfindung benutzt nur diese eine Anzeigeeinheit 12 als -Kundenanzeige. Um dabei jedoch eine große Flexibilität der Darstellung zu erreichen und ohne Speicher für Preistabellen auskommen zu können, führt die Auswerteeinheit 10 gemäß der Erfindung von sich aus keine Ausgaben auf die Anzeigeeinheit durch. Vielmehr wird, wie durch die verdickte Linie 17 in Fig. 1 angedeutet, zunächst das Meßergebnis von der Auswerteeinheit 10 nach Empfang von Meßdaten von dem Meßaufnehmer 11 als geeichte Daten in die Kasse 14 übertragen. Dort wird über eine Preistabelle ein Preis bestimmt, eine Anzeige zusammengestellt und an die Auswerteeinheit 10 gesandt. Die Auswerteeinheit 10 überprüft die gewünschten Anzeigetexte daraufhin, daß sie nicht unzulässig sind, und zeigt sie an. Eine sehr einfache Prüfung besteht darin, alle Zahlen abzuweisen, die ein Komma oder Dezimalpunkt enthalten, sofern diese Zahlen nicht denselben Wert haben wie das zuletzt gemessene Gewicht. Um auch Preise anzeigen zu können, ist eine umfangreichere Prüfung und detaillierte Analyse notwendig, die wie folgt aussehen kann: Es wird nach Zahlen mit Komma oder Dezimalpunkt gesucht, sowie nach den Zeichenfolgen "DM", "kg" und "DM/kg". Diesen Zeichenfolgen werden die nächstliegenden Bruchzahlen zugewiesen. Sodann wird geprüft, ob der Quotient der "DM" und "kg" zugewiesenen Zahlen gleich der "DM/kg" zugewiesenen Zahl ist. Ist diese Bedingung verletzt, erfolgt keine Anzeige. Zudem muß der "kg" zugeordnete Betrag mit dem zuletzt gemessenen Gewicht übereinstimmen. Damit braucht die Auswerteeinheit keinen Speicher für Preistabellen mehr aufzuweisen; lediglich muß das zuletzt gemessene Gewicht gespeichert werden.

Ein Belegdrucker 13 wird genauso direkt an die Auswerteeinheit angeschlossen und in gleicher Weise behandelt wie eine Anzeigeeinheit.

Alternativ oder zusätzlich kann der Anzeigetext Platzhalter für den gemessenen Wert, z.B. "#G:kg#" für das Gewicht in kg, enthalten. Solche Platzhalter werden durch Steuer- oder Sonderzeichen, wie im Beispiel das Doppelkreuz "#", gekennzeichnet. Die Auswerteeinheit 10 ersetzt den Platzhalter durch den gemessenen Wert. Der Preis pro Einheit wurde zuvor mit einem anderen Kommando, z.B. "#DM/kg=13,50#, übergeben; dieses Kommando führt zu keiner Ausgabe, vielmehr wird der Werte "13,50" als Grundpreis gespeichert. Ein dritter Platzhalter, z.B. "#P:DM#", wird durch das Produkt von gemessenem Wert und gespeichertem Einheitspreis ersetzt. Weitere Varianten hierzu können nach dem üblichen Können und Wissen eines Software-Technikers gestaltet werden. Das ausgewählte Verfahren wird dann als Teil der Eichung der Auswerteeinheit von der Eichbehörde geprüft und zugelassen.

Es ist auch möglich, daß die Waage eine Preistabelle enthält oder der Grundpreis vorab von der Kasse an die Waage übermittelt wird. Die Waage führt dann eine Preisberechnung durch und übermittelt sowohl Gewicht als auch Preis an die Kasse, welche wiederum den Anzeigetext aufbaut. Da die Kasse bereits den Preis berechnet hat, kann die Überprüfung der Anzeige vereinfacht werden, weil nur die bereits bekannten Zahlenwerte für Gewicht, Grundpreis und Preis auftreten können.

Auch kann entsprechend nationaler Bestimmungen eine in Fig. 2 nicht gezeigte zusätzliche Anzeige für das Gewicht in den Meßaufnehmer integriert werden. Die Überwachung der Relation von Gewicht, Grundpreis und Preis ist davon nicht berührt.

## Patentansprüche

1. Verfahren zur Benutzung einer Anzeige (12) einer eichfähigen Meßeinrichtung, welche umfaßt:
a) die Anzeige (12),
b) einen Meßaufnehmer (11),
c) eine Datenübertragungseinrichtung (20),
b) eine Auswerteeinheit (10), die unmittelbar mit der Anzeige (12), der Datenübertragungseinrichtung (20) und dem Meßaufnehmer (11) verbunden ist,
wobei die Anzeige (12) benutzt wird, indem die Auswerteeinheit (10)
1) über die Datenübertragungseinrichtung (20) einen Auftrag zur Darstellung von Information erhält,
2) diesen Auftrag einer Zulässigkeitsprüfung unterzieht, welche einen mit dem Meßaufnehmer gemessenen Meßwert berücksichtigt, indem die in der anzuzeigenden Information enthaltenen Zahlen geprüft werden,
3) zulässigenfalls den Auftrag ausführt und so die Information anzeigt; unzulässigenfalls hingegen die Darstellung der Information unterdrückt.

2. Verfahren nach Anspruch 1 mit dem weiteren Merkmal
4) daß die Zulässigkeitsprüfung die Kontrolle der Berechnung eines durch einen Faktor aus dem Meßwert abgeleiteten Wertes umfaßt.

3. Verfahren nach Anspruch 1 oder 2, wobei der Meßwert von der Auswerteeinheit direkt zur Anzeige gebracht wird.

4. Verfahren nach Anspruch 2, wobei der Faktor über die Datenübertragungseinrichtung (20) zuvor übermittelt wird.

5. Verfahren nach einem der Ansprüche 1 bis 4, wobei die Datenübertragungseinrichtung (20) das Bussystem eines Rechners ist.

6. Verfahren nach einem der Ansprüche 1 bis 4, wobei die Datenübertragungseinrichtung (20) eine serielle Schnittstelle verwendet.

7. Verfahren nach einem der Ansprüche 1 bis 6, wobei zulässigenfalls die Auswerteeinheit (10) alternativ oder zusätzlich die Information auf einem direkt an die Auswerteeinheit angeschlossenen Drucker (13) ausgibt.

8. Verfahren nach einem der Ansprüche 1 bis 7, wobei die Datenübertragungseinrichtung (20) eine Verbindung mit einer Datenverarbeitungseinrichtung (14, 14a) herstellt, die Teil einer Kasse ist.

9. Verfahren nach einem der Ansprüche 1 bis 8, wobei der Meßaufnehmer (11) ein Gewicht mißt.

10. Anordnung zur Benutzung einer Anzeige (12) einer eichfähigen Meßeinrichtung, welche umfaßt:
1. die Anzeige (12),
2. einen Meßaufnehmer (11),
3. eine Datenübertragungseinrichtung (20),
4. eine Auswerteeinheit (10), die unmittelbar mit der Anzeigevorrichtung (12), der Datenübertragungseinrichtung (20) und dem Meßaufnehmer (11) verbunden ist,
5. eine Datenverarbeitungseinrichtung (14, 14a), welche mit der Datenübertragungseinrichtung (20) verbunden ist, und über diese einen Anzeigeauftrag senden kann,
6. eine Prüfeinrichtung (18), welche
6.1 Teil der Auswerteeinheit (10) ist,
6.2 zwischen der Datenübertragungseinrichtung (20) und dem Ausgang zur Anzeige (12) angeordnet ist,
6.3 Zugriff auf mindestens den letzten von der Auswerteeinheit (10) bestimmten Meßwert hat
6.4 mit Hilfe dieses Meßwertes eine Zulässigkeitsprüfung des Anzeigeauftrags durchführt, indem die darin enthaltenen Zahlen geprüft werden.

11. Anordnung nach Anspruch 10, wobei die Auswerteeinrichtung (10) ein Modul zum Einstecken in einen Steckplatz (21a, 21b, 21c) ist, der Teil der Datenübertragungseinrichtung (20) ist.

12. Anordnung nach Anspruch 11, wobei die Steckplätze (21a, 21b, 21c) Zugang zu einem Bussystem (20) sind.

13. Anordnung nach einem der Ansprüche 11 bis 12, wobei die Datenverarbeitungseinrichtung (14, 14a) Teil einer Kasse ist.

14. Anordnung nach einem der Ansprüche 10 bis 13, wobei der Meßaufnehmer (11) ein Gewicht mißt.

15. Anordnung nach einem der Ansprüche 10 bis 14, wobei an der Auswerteeinheit, vorzugsweise als Teil des Meßaufnehmers, eine zusätzliche, nicht durch Benutzung der Anzeige (12) beeinflußte Meßwertanzeige angeschlossen ist.

## Claims

1. Method for using a display (12) of a measuring arrangement which is capable of being calibrated and which comprises:
a) the display (12),
b) a measuring sensor (11),
c) a data transmission device (20),
d) an evaluation unit (10) which is directly connected to the display (12), the data transmission device (20) and the measuring sensor (11),
the display (12) being used in that the evaluation unit (10)
1) receives, via the data transmission device (20), an order to represent information,
2) subjects this order to an acceptability test which takes into account at least one measurement which is measured with the measuring sensor,
3) carries out the order if it is acceptable and thus displays the information; on the other hand if it is not acceptable it suppresses the representation of the information.

2. Method according to Claim 1 with the further feature
4) that the acceptability test comprises the monitoring of the calculation of a value derived from the measurement by means of a factor.

3. Method according to Claim 1 or 2, the measurement being displayed directly by the evaluation unit.

4. Method according to Claim 2, the factor being previously transmitted by means of the data transmission device (20).

5. Method according to one of Claims 1 to 4, the data transmission device (20) being the bus system of a computer.

6. Method according to one of Claims 1 to 4, the data transmission device (20) using a serial interface.

7. Method according to one of Claims 1 to 6, in the case of acceptance the evaluation unit (10) alternatively or additionally outputting the information on a printer (13) connected directly to the evaluation unit.

8. Method according to one of Claims 1 to 7, the data transmission device (20) establishing a connection to a data processing device (14, 14a) which is part of a cash register.

9. Method according to one of Claims 1 to 8, the measuring sensor (11) measuring a weight.

10. Arrangement for using a display (12) of a measuring arrangement which is capable of being calibrated and which comprises:
1. the display (12),
2. a measuring sensor (11),
3. a data transmission device (20),
4. an evaluation unit (10) which is directly connected to the display device (12), the data transmission device (20) and the measuring sensor (11),
5. a data processing device (14, 14a) which is connected to the data transmission device (20) and can transmit a display order by means of the latter,
6. a test device (18) which
6.1 is part of the evaluation unit (10),
6.2 is arranged between the data transmission device (20) and the output to the display (12),
6.3 has access to at least the last measurement determined by the evaluation unit (10),
6.4 carries out an acceptability test of the display order using this measurement.

11. Arrangement according to Claim 10, the evaluation device (10) being a module for plugging into a module location (21a, 21b, 21c) which is part of the data transmission device (20).

12. Arrangement according to Claim 11, the module locations (21a, 21b, 21c) being access to a bus system (20).

13. Arrangement according to one of Claims 11 to 12, the data processing device (14, 14a) being part of a cash register.

14. Arrangement according to one of Claims 10 to 13, the measuring sensor (11) measuring a weight.

15. Arrangement according to one of Claims 10 to 14, an additional measurement display, which is not influenced by use of the display (12), being connected to the evaluation unit, preferably as part of the measuring sensor.

## Revendications

1. Procédé d'utilisation d'un dispositif (12) d'affichage d'un dispositif de mesure pouvant être vérifié, qui comprend :
a) le dispositif (12) d'affichage,
b) un récepteur (11) de mesure,
c) un dispositif (20) de transmission de données,
d) une unité (10) d'exploitation, qui est reliée directement au dispositif (12) d'affichage, au dispositif (20) de transmission de données et au récepteur (11) de mesure,
le dispositif (12) d'affichage étant utilisé du fait que l'unité (10) d'exploitation
1) reçoit par l'intermédiaire du dispositif (20) de transmission de données une instruction de présentation d'information,
2) soumet cette instruction à un contrôle d'admissibilité, qui prend en compte une valeur de mesure mesurée par le récepteur de mesure du fait que les nombres contenus dans l'information à afficher sont contrôlés,
3) dans le cas d'admissibilité, exécute l'instruction et affiche donc l'information ; dans le cas de non admissibilité en revanche, supprime la présentation de l'information.

2. Procédé suivant la revendication 1, comportant la disposition supplémentaire
4) la vérification d'admissibilité comprend le contrôle du calcul d'une valeur dérivée de la valeur de mesure par un facteur.

3. Procédé suivant la revendication 1 ou 2, la valeur de mesure étant affichée directement par l'unité d'exploitation.

4. Procédé suivant la revendication 2, le facteur étant transmis auparavant par l'intermédiaire du dispositif (20) de transmission de données.

5. Procédé suivant l'une des revendications 1 à 4, le dispositif (20) de transmission de données étant le système de bus d'un ordinateur.

6. Procédé suivant l'une des revendications 1 à 4, le dispositif (20) de transmission de données utilisant une interface sérielle.

7. Procédé suivant l'une des revendications 1 à 6, l'unité (10) d'exploitation envoyant, dans le cas d'admissibilité, en variante ou en plus, l'information à une imprimante (13) raccordée directement à l'unité d'exploitation.

8. Procédé suivant l'une des revendications 1 à 7, le dispositif (20) de transmission de données produisant une liaison avec un dispositif (14, 14a) de traitement de données qui fait partie d'une caisse.

9. Procédé suivant l'une des revendications 1 à 8, le récepteur de mesure mesurant un poids.

10. Dispositif pour l'utilisation d'un dispositif (12) d'affichage d'un dispositif de mesure pouvant être vérifié, qui comprend :
1. le dispositif (12) d'affichage,
2. un récepteur (11) de mesure,
3. un dispositif (20) de transmission de données,
4. une unité (10) d'exploitation, qui est reliée directement au dispositif (12) d'affichage, au dispositif (20) de transmission de données et au récepteur (11) de mesure,
5. un dispositif (14, 14a) de traitement de données, qui est relié au dispositif (20) de transmission de données et qui peut émettre une instruction d'affichage par l'intermédiaire de ce dernier,
6. un dispositif (18) de contrôle qui
6.1 fait partie de l'unité (10) d'exploitation,
6.2 est monté entre le dispositif (20) de transmission de données et la sortie vers l'affichage (12),
6.3 a accès au moins à la dernière valeur de mesure déterminée par l'unité (10) d'exploitation,
6.4 effectue à l'aide de cette valeur de mesure un contrôle d'admissibilité de l'instruction d'affichage en contrôlant les nombres qui y sont contenus.

11. Dispositif suivant la revendication 10, le dispositif (10) d'exploitation étant un module à enficher à un emplacement (21a, 21b, 21c) d'enfichage, qui fait partie du dispositif (20) de transmission de données.

12. Dispositif suivant la revendication 11, les emplacements (21a, 21b, 21c) d'enfichage étant un accès à un système (20) de bus.

13. Dispositif suivant l'une des revendications 11 à 12, le dispositif (14, 14a) de traitement de données faisant partie d'une caisse.

14. Dispositif suivant l'une des revendications 10 à 13, le récepteur (11) de mesure mesurant un poids.

15. Dispositif suivant l'une des revendications 10 à 14, un dispositif d'affichage de valeur de mesure supplémentaire, qui n'est pas influencé par l'utilisation de l'affichage (12) et qui se présente de préférence comme une partie du récepteur de mesure, étant raccordé à l'unité d'exploitation.
